# EUROPÄISCHE PATENTSCHRIFT

(11) **EP 3 870 397 B1**
(45) Veröffentlichungstag und Bekanntmachung des Hinweises auf die Patenterteilung: **07.06.2023**
(21) Anmeldenummer: 19787151.0
(22) Anmeldetag: 24.09.2019
(51) Int. Cl.: B24B 39/00

(54) **WERKZEUG UND VERFAHREN ZUR MECHANISCHEN OBERFLÄCHENBEARBEITUNG**
TOOL AND METHOD FOR MECHANICAL SURFACE TREATMENT
OUTIL ET PROCÉDÉ DE TRAITEMENT MÉCANIQUE DE SURFACE

(30) Priorität: 22.10.2018 DE 102018126185
(43) Veröffentlichungstag der Anmeldung: 01.09.2021
(73) Patentinhaber: Schaeffler Technologies AG & Co. KG, 91074 Herzogenaurach (DE)
(72) Erfinder: KUCKUK, André, 91074 Herzogenaurach (DE); BUSCHKA, Martin, 91074 Herzogenaurach (DE)
(86) Internationale Anmeldenummer: PCT/DE2019/100838
(87) Internationale Veröffentlichungsnummer: WO 2020/083425

(56) Entgegenhaltungen:
- EP-A1- 0 353 427
- WO-A1-02/06007
- CN-A- 107 138 915
- DE-A1- 2 152 921
- DE-A1-102012 015 308

## Beschreibung

Die Erfindung betrifft ein zur mechanischen Oberflächenbearbeitung vorgesehenes Werkzeug nach dem Oberbegriff des Anspruchs 1. Ferner betrifft die Erfindung ein mechanisches Oberflächenbearbeitungsverfahren.

Ein gattungsgemäßes Werkzeug ist beispielsweise aus der DE 10 2011 050 662 B4 bekannt. Es handelt sich hierbei um ein Walzwerkzeug für die Bearbeitung eines Pleuelauges. Das Walzwerkzeug ist als Ganzes rotierbar und weist einen Wälzkörper auf, der in eine Ausnehmung des Walzwerkzeugs eingesetzt ist und entlang der Ausnehmung nach außen mit einem unter Druck stehenden Fluid beaufschlagt ist, wobei es sich bei dem Fluid im Fall der DE 10 2011 050 662 B4 um ein Aerosol handelt.

Ein weiteres Walzwerkzeug ist in der DE 103 40 267 A1 offenbart. Dieses Walzwerkzeug weist eine hydraulisch gelagerte Formrolle auf. Die Formrolle, welche auch als Walzrolle bezeichnet wird, läuft während des Walzens eines Werkstücks mit einem Arbeitsumfang rotierend am Werkstück entlang. Hierbei ist der Arbeitsumfang von einem Lagerkontaktbereich der Walzenrolle räumlich getrennt. Insbesondere ist der Lagerkontaktbereich im Querschnitt kreisbogenförmig gekrümmt, wobei er beiderseits des Werkstückkontaktbereichs angeordnet ist. Das Walzwerkzeug soll insbesondere für die Bearbeitung von Bauteilen geeignet sein, welche dynamischen Belastungen ausgesetzt sind.

Grundsätzlich bekannt ist auch eine hämmernde Bearbeitung einer Oberfläche eines Werkstücks. Beispielhaft wird in diesem Zusammenhang auf die WO 2016/135169 A1 hingewiesen.

Eine Feinstbearbeitung mit Vibrationskopf ist in der DE 196 34 839 A1 beschrieben. Die Bearbeitung wird an einem drehenden Werkstück durchgeführt, wobei ein Linearmotor einen Kopf des Werkzeugs gegen das sich drehende Werkstück drückt und zugleich eine Vibrationseinrichtung zum Vibrieren des Kopfes vorgesehen ist. Die Feinstbearbeitungsvorrichtung mit Vibrationskopf ist zur Bearbeitung von Nockenwellen vorgesehen.

Die EP 0 253 907 B1 offenbart ein Verfahren zum Walzen von Querbohrungen aufweisenden Zapfen. Im Rahmen dieses Verfahrens wird zum Teil eine pulsierende Walzkraft und zum Teil eine nicht pulsierende Walzkraft angewandt.

Ein Verfahren zum Festwalzen von Kurbelwellen ist zum Beispiel in der DE 30 37 688 C2 beschrieben. Das Verfahren soll insbesondere an Übergangsradien von Lagerzapfen nutzbar sein. Im Rahmen des Verfahrens auftretende Walzkräfte pulsieren mit einer Frequenz von 30 bis 300 Hertz.

Die US 2010/0052262 A1 beschreibt eine für ein Radlager vorgesehene Dichtungsvorrichtung, welche ein elastisches Dichtungselement und ein metallisches Anschlagelement umfasst. Das Anschlagelement weist hierbei eine durch Kugelstrahl-Behandlung bearbeitete Oberfläche auf.

Die EP 1 296 801 B1 beschreibt ein kombiniertes Schäl- und Glattwalzwerkzeug. Das Werkzeug ist zur Oberflächenbearbeitung des zylindrischen Innenraums eines hohlen Werkstücks vorgesehen.

Die DE 10 2012 015 308 A1 offenbart eine Umformvorrichtung und ein Umformverfahren zum Umformen der Oberfläche eines Motorbauteils. Das Umformwerkzeug weist einen Umformkörper auf, der mindestens einen an einer Wälzkörperbasis des Umformwerkzeugs drehbar gelagerten Wälzkörper umfasst, der an seinem Außenumfang eine als Umformfläche vorgesehene Mantelfläche aufweist. Dabei kann eine Vibrationseinrichtung zur Erzeugung von Vibrationen des Umformwerkzeugs und/oder einer Werkstück-Halterung vorhanden sein, um Pulse oder Vibrationen zu erzeugen.

Dadurch erzeugt der Wälzkörper eine entsprechend unregelmäßige Prägekontur an der Oberfläche des Motorbauteils.

Die dem Oberbegriff von Anspruch 1 zugrunde gelegte EP 0 353 427 A1 beschreibt eine Walzeinheit mit einem Walzelement. Die Walzkraft wird hydraulisch mittels einer Pumpe aufgebracht. Ein Druckspeicher ist zum Auffangen von hierbei auftretenden Druckschwankungen vorgesehen.

Die CN 107 138 915 A beschreibt eine Vorrichtung mit einer Ultraschall-basierten Glätteinheit umfassend einen Wälzkörper zum Glätten eines Werkstücks.

Die WO 02/06007 A1 offenbart eine Glättvorrichtung mit einer Druckfeder, einer Glättkugel und einer Ultraschallvibrationseinheit.

Die DE 21 52 921 A1 beschreibt ein Verfahren und ein Werkzeug zum Verdichten und Glätten von Werkstückoberflächen. In einer ersten Ausführungsform ist eine rotierende Glättkugel zum Glätten eines Werkstücks vorgesehen. In einer zweiten Ausführungsform ist ein Stift mit einer das zu glättende Werkstück kontaktierenden Kugelfläche vorgesehen, der an einem Druckluft-betriebenen Vibrationsgerät angeordnet ist. Der Erfindung liegt die Aufgabe zugrunde, gegenüber dem Stand der Technik weiterentwickelte Möglichkeiten der Oberflächenbearbeitung von Werkstücken, insbesondere der Bearbeitung von Dichtflächen, anzugeben.

Diese Aufgabe wird erfindungsgemäß gelöst durch ein Oberflächenbearbeitungswerkzeug mit den Merkmalen des Anspruchs 1. Ebenso wird die Aufgabe gelöst durch ein Verfahren zur mechanischen Oberflächenbearbeitung gemäß Anspruch 5. Im Folgenden im Zusammenhang mit dem Oberflächenbearbeitungsverfahren erläuterte Ausgestaltungen und Vorteile der Erfindung gelten sinngemäß auch für die Vorrichtung, das heißt das Werkzeug, und umgekehrt.

Das Werkzeug umfasst in an sich bekannter Grundkonzeption ein Gehäuse, in welchem ein zur Befüllung mit einem Hydraulikmedium vorgesehener Hohlraum gebildet ist, sowie mindestens einen dem Grunddruck des Hydraulikmediums ausgesetzten, zum Abrollen auf einer zu bearbeitenden Werkstückoberfläche vorgesehenen Walzkörper. Weiterhin umfasst das Werkzeug einen Schwinger, welcher zur Erzeugung von gezielten Druckpulsen im Hydraulikmedium ausgebildet ist. Dabei wird der Grunddruck des Hydraulikmediums gezielt pulsierend erhöht, wobei die Druckpulse dem Grunddruck hinzuaddiert werden und diesen überlagern.

Durch den Schwinger wird dem Anpressdruck des Werkzeugs an das zu bearbeitende Werkstück eine pulsierende Belastung überlagert, welche zu einer Strukturierung der Oberfläche des Werkstücks führt. Die Erzeugung der oszillierenden Belastung des Walzkörpers durch gezielte pulsierende Druckbeaufschlagung des Hydraulikmediums ermöglicht auf einfache Weise eine Einstellung, Kontrolle und Begrenzung der vom Walzkörper auf die Werkstückoberfläche aufgebrachten Kräfte.

Bei dem zur Erzeugung der Druckpulse im Hydraulikmedium verwendeten Schwinger handelt es sich beispielsweise um einen piezoelektrischen Aktuator.

Zum technologischen Hintergrund wird in diesem Zusammenhang beispielhaft auf die DE 10 2014 220 883 B4 hingewiesen.

Erfindungsgemäß weist das Oberflächenbearbeitungswerkzeug einen einzigen Walzkörper auf, wobei dieser an der Spitze des Gehäuses angeordnet ist. Das Gehäuse ist hierbei insgesamt rohrförmig gestaltet.

Bei dem Walzkörper handelt es sich beispielsweise um eine Kugel. Alternativ kann es sich bei dem Walzkörper um eine Rolle, zum Beispiel eine Tonnenrolle, handeln. Gegenüber dem Gehäuse kann der Walzkörper durch eine Dichtung abgedichtet sein.

In erfindungsgemäßer und daher besonders raumsparender Gestaltung ist der Schwinger in das rohrförmig gestaltete Gehäuse des Werkzeugs eingebaut. Im Sinne einer möglichst unverminderten Weiterleitung der Druckpulse ist eine Anordnung des Schwingers nahe am Walzkörper von Vorteil. Der Schwinger ist von einer Vorrichtung zur Erzeugung des Grunddrucks im Hydraulikmedium, welcher für den Walzvorgang benötigt wird, insbesondere einer Hydraulikpumpe, räumlich getrennt. Insbesondere kann eine Hydraulikpumpe als gesonderte Maschine, welche nicht dem Oberflächenbearbeitungswerkzeug zuzurechnen, sondern lediglich mit diesem zu koppeln ist, bereitgestellt werden.

Während des Abrollens des Walzkörpers auf der Oberfläche des Werkstücks bleibt der Kontakt zwischen dem Walzkörper und der Werkstückoberfläche in bevorzugter Verfahrensführung permanent erhalten. Je nach Geometrie des Walzkörpers werden durch diesen beispielsweise sphärische Vertiefungen in der Werkstückoberfläche aufgrund der pulsierenden Druckbeaufschlagung erzeugt. Die Verteilung der auf der Werkstückoberfläche erzeugten Vertiefungen ist typischerweise stochastisch oder quasi-stochastisch.

Handelt es sich bei der bearbeiteten Oberfläche um eine Dichtfläche eines metallischen Bauteils, beispielsweise eines Flansches, eines Wälzlagerrings oder eines Gleitlagerrings, so wird mit der Oberflächenstrukturierung ein besonders günstiges Verhältnis zwischen Verschleißfestigkeit, Reibung der Dichtung und Dichtwirkung erzielt.

Die Aufgabe wird durch das erfindungsgemäße Verfahren zur mechanischen Oberflächenbearbeitung gelöst, wobei mit einem erfindungsgemäßen Werkzeug eine Oberfläche eines rotierenden metallischen Werkstücks durch pulsierende Druckbeaufschlagung bearbeitet wird, wobei einem Grunddruck p₀ des Hydraulikmediums gezielt Druckpulse oder Druckimpulse Δp überlagert werden.

Die Frequenz der mittels des Schwingers realisierten pulsierenden Druckbeaufschlagung ist dabei wesentlich höher als die Frequenz, mit der das zu bearbeitende Werkstück rotiert. Erfindungsgemäß erfolgt die pulsierende Druckbeaufschlagung mit einer Frequenz, welche mindestens dem 24-fachen der Drehzahl des Werkstücks entspricht.

Während der pulsierenden Druckbeaufschlagung wird das Werkzeug typischerweise linear gegenüber dem Werkstück verschoben. Hierbei unterscheidet sich die Geschwindigkeit der linearen Verschiebung von der Oberflächengeschwindigkeit des Walzkörpers auf dem Werkstück vorzugsweise mindestens um den Faktor 6. Dies bedeutet, dass die Geschwindigkeit, mit welcher das Werkzeug gegenüber dem Werkstück verschoben wird, entweder wesentlich geringer oder wesentlich höher als die Oberflächengeschwindigkeit des rotierenden Werkstücks ist.

Im Fall eines langsamen Vorschubs des Werkzeugs können auf einer zylindrischen Werkstückoberfläche beispielsweise zahlreiche Vertiefungen erzeugt werden, welche insgesamt eine schraubenförmige Spur beschreiben. Durch eine hohe Frequenz der pulsierenden Druckbeaufschlagung und eine niedrige Steigung der schraubenförmigen Spur wird insgesamt eine sehr gleichmäßige Verteilung der Vertiefungen auf der zylindrischen Werkstückoberfläche erreicht.

Liegt die zu bearbeitende Oberfläche dagegen in einer Ebene, welche normal zur Rotationsachse, das heißt Mittelachse, des Werkstücks ausgerichtet ist, so kann das Werkzeug während der Bearbeitung beispielsweise radial von Innen nach Außen oder von Außen nach Innen verschoben werden. Geschieht diese Verschiebung während des Bearbeitungsvorgangs nur ein einziges Mal, so bildet sich eine Spur an Vertiefungen, welche eine Spirale beschreibt. Durch geringe Geschwindigkeit der radialen Verschiebung und ausreichend hohe Frequenz der pulsierenden Druckbeaufschlagung ist auch hier eine gleichmäßige Verteilung der Vertiefungen auf der bearbeiteten Fläche, beispielsweise einer Stirnfläche eines zylindrischen Bauteils oder einer Frontfläche eines Flansches, erreichbar.

Ebenso sind scheibenförmige Flächen der genannten Art bearbeitbar, indem das Werkzeug im Vergleich zur tangentialen Geschwindigkeit der zu bearbeitenden Oberfläche relativ schnell oszillierend zwischen einem radial inneren und einem radial äußeren Extrempunkt verfahren wird. Durch das Verfahren des Werkzeugs in radialer Richtung werden Wellen auf der scheibenförmigen Werkstückoberfläche beschrieben. Im Laufe mehrerer Umdrehungen des Werkstücks überlagern sich diese Wellen vielfach, so dass im Ergebnis auch bei dieser Verfahrensvariante eine stochastisch erscheinende, mit guter Näherung gleichmäßige Verteilung der Vertiefungen auf der Werkstückoberfläche erreicht wird. Ein analoges Verfahren ist auch bei einer zylindrischen Werkstückoberfläche anwendbar. In diesem Fall wird das Werkzeug oszillierend in Axialrichtung gegenüber dem Werkstück bewegt. Die Frequenz dieser Oszillation ist hierbei höher als die Drehzahl des Werkstücks.

In allen Fällen wird durch das Oberflächenbearbeitungswerkzeug sowohl eine Verfestigung als auch eine Strukturierung der bearbeiteten Oberfläche erreicht, wobei die Bearbeitungsparamater in einem weiten Rahmen einstellbar sind.

Unabhängig von der Frequenz, die für die Rotation des zu bearbeitenden Werkstücks letztendlich gewählt wird, ist es besonders bevorzugt, wenn eine Anzahl an Druckpulsen oder Druckimpulsen Tₘ pro Wegeinheit des auf einer Oberfläche eines Werkstücks absolvierten Walzweges I_{w} im Bereich von 100 bis 5000 pro Meter liegt.

Insbesondere werden Druckpulse oder Druckimpulse Δp aufgebracht, die im Bereich von 0,2 _{*} p₀ bis 200 bar liegen, wobei p₀ dem Grunddruck im Hydraulikmedium beim Glattwalzen entspricht. Etwaige systembedingte Schwankungen des Grunddrucks sind dabei vernachlässigbar, da der Druckpuls immer dem aktuellen Grundruck zuaddiert wird.

Eine Verwendung eines erfindungsgemäßen Werkzeugs zur Bearbeitung einer Dichtfläche eines metallischen Bauteils, insbesondere eines Flansches oder eines Bauteils eines Lagers, hat sich besonderes bewährt. Als Dichtfläche wird eine Oberfläche des Bauteils bezeichnet, gegen welche eine Dichtung, insbesondere eine elastische Dichtung aus Kunststoff, berührend anläuft.

Bei dem Bauteil eines Lagers handelt es sich insbesondere um einen Wälzlagerring, insbesondere eines Radlagers, oder einen Gleitlagerring. Mit einer Oberflächenstrukturierung wird bei einem metallischen Bauteil in dessen Anlaufbereich für eine Dichtung ein besonders günstiges Verhältnis zwischen Verschleißfestigkeit, Reibung der Dichtung und der erzielten Dichtwirkung erhalten.

Nachfolgend wird ein Ausführungsbeispiel der Erfindung anhand zweier Zeichnungen näher erläutert. Hierin zeigt:
- Fig. 1: in einer vereinfachten Schnittdarstellung ein Werkzeug zur mechanischen Oberflächenbearbeitung, und
- Fig 2: eine Darstellung zum Glattwalzen mit pulsierendem Druck im Walzkontakt.

Ein Werkzeug 1 zur mechanischen Oberflächenbearbeitung weist ein Gehäuse 2 auf, welches als Rohrkörper ausgebildet ist. Das Werkzeug 1 ist zur modifizierten Glattwalzbearbeitung vorgesehen und wird vereinfachend auch als Glattwalzwerkzeug bezeichnet. Mit dem Werkzeug 1 wird eine Oberfläche eines Werkstücks bearbeitet, welche als Dichtfläche fungieren soll. Insbesondere kann es sich um eine Dichtfläche eines Lagers, insbesondere eines Wälz- oder Gleitlagers, vorzugsweise eines Radlagers handeln. Die Dichtfläche ist dabei unmittelbar an einem Lagerring des Lagers, insbesondere einem Wälzlagerring eines Radlagers, ausgebildet.

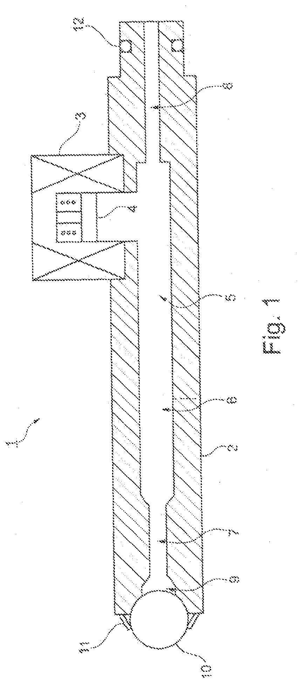

In das Gehäuse 2 des Werkzeugs 1 ist, wie aus Fig. 1 hervorgeht, ein Schwinger 4 integriert. Bei Schwinger 4 ist Teil eines piezoelektrischen Aktuators 3 und grenzt an einen den Rohrkörper durchziehenden Hohlraum 5, welcher mit einem Hydraulikmedium gefüllt ist. Bei dem Hydraulikmedium handelt es sich beispielsweise um ein Hydrauliköl oder um Kühlschmiermittel.

Der Hohlraum 5 durchzieht den gesamten Rohrkörper, wobei an einen mittleren Abschnitt 6 erweiterten Querschnitts zwei Abschnitte 7, 8 verengten Querschnitts anschließen. Ein Endabschnitt 9 des Hohlraums 5 an der Spitze des Rohrkörpers ist gegenüber dem Abschnitt 7 aufgeweitet und erstreckt sich bis zu einer Bearbeitungskugel, die allgemein als Walzkörper 10 bezeichnet wird.

Die Bearbeitungskugel ragt aus dem Rohrkörper heraus und ist gegenüber diesem durch eine Dichtung 11 abgedichtet. Auf der gegenüberliegenden Seite, das heißt hinteren Seite, des Rohrkörpers ist eine weitere Dichtung 12 erkennbar, welche den abgedichteten Anschluss des Werkzeugs 1 an eine Druckmittelversorgung ermöglicht.

Durch die Druckmittelversorgung wird ein Grunddruck p₀ des Hydraulikmediums im Hohlraum 5 eingestellt. Diesem Grunddruck p₀ wird durch den piezoelektrischen Aktuator 3 einschließlich des Schwingers 4 eine pulsierende Druckbeaufschlagung überlagert. Die einzelnen Druckpulse oder Druckimpulse Δp sorgen dafür, dass der Walzkörper 10 beim Bearbeitungsvorgang einzelne Vertiefungen in einer metallischen Werkstückoberfläche erzeugt.

Während des Bearbeitungsvorgangs ist das Werkstück in einer Ausführungsform der Erfindung in eine Bearbeitungsmaschine, insbesondere Drehmaschine, eingespannt. Die zu bearbeitende Werkstückoberfläche weist dabei typischerweise eine zylindrische Form auf. Das Werkzeug 1 wird zur Bearbeitung in radialer Richtung an das Werkstück herangeführt und bei der Bearbeitung in axialer Richtung, das heißt in Längsrichtung der Werkstückmittelachse, verschoben. Die Frequenz, mit der die Bearbeitungskugel pulsiert, ist um ein Vielfaches höher als die Oberflächengeschwindigkeit des Werkstücks. Der Kontakt zwischen dem Walzkörper 10 und der Werkstückoberfläche bleibt während des Bearbeitungsvorgangs permanent aufrechterhalten.

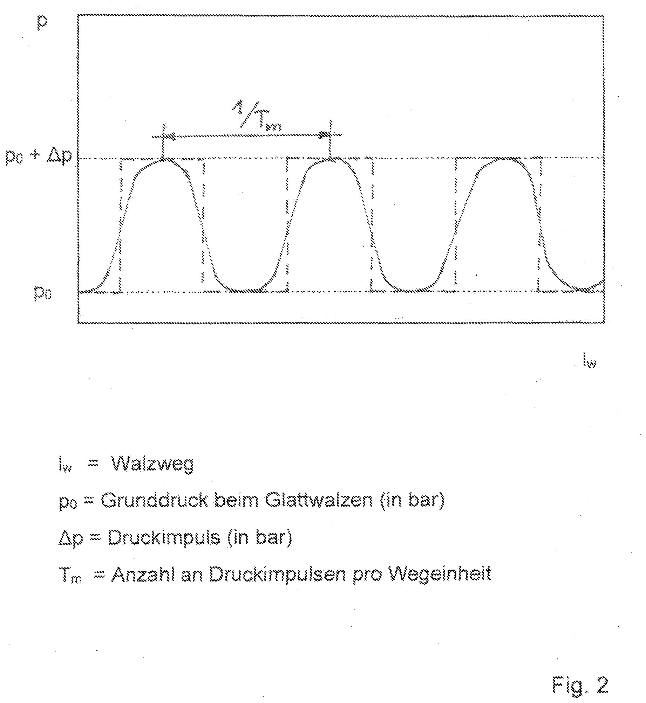

Figur 2 zeigt eine Darstellung zum Glattwalzen mit pulsierendem Druckverlauf im Bereich des Walzkontakts zwischen Walzkörper 10 und einem metallischen Werkstück. Das Diagramm zeigt den Walzdruck p aufgetragen über dem zurückgelegten Walzweg I_{w} auf der Oberfläche des Werkstücks. Dargestellt ist der Druckverlauf des Walzkörpers 10 auf der Oberfläche eines glattzuwalzenden Werkstücks. Ausgehend vom zum Glattwalzen benötigten Grunddruck p₀ in bar werden positive Druckpulse oder Druckimpulse Δp in bar erzeugt, wobei ein Maximaldruck p₀ + Δp erreicht wird, der pulsierend auf das zu bearbeitende Werkstück übertragen wird. Dies führt zu einer bleibenden Oberflächenstruktur auf dem metallischen Werkstück mit Vertiefungen, die insbesondere im Bereich einer Dichtfläche eines solchen Werkstücks die oben beschriebenen Vorteile hinsichtlich zwischen Verschleißfestigkeit, Reibung der Dichtung und der erzielten Dichtwirkung aufweist.

Dabei muss der pulsierende Druckverlauf nicht zwingend eine Sinuskurve beschreiben, wie in Figur 2 annähernd gezeigt, sondern kann im Verlauf des Walzweges I_{w} auch anschwellende, abschwellende, sich wiederholende, unterschiedliche und auch unregelmäßige Verläufe des Maximaldrucks über die Oberfläche des Werkstücks verteilt zeigen.

### Bezugszeichenliste

- 1: Werkzeug
- 2: Gehäuse
- 3: Piezoelektrischer Aktuator
- 4: Schwinger
- 5: Hohlraum
- 6: mittlerer Abschnitt
- 7: Abschnitt
- 8: Abschnitt
- 9: Endabschnitt
- 10: Walzkörper
- 11: Dichtung
- 12: weitere Dichtung

## Patentansprüche

1. Werkzeug (1) zur mechanischen Oberflächenbearbeitung, mit einem Gehäuse (2), in welchem ein zur Befüllung mit einem Hydraulikmedium vorgesehener Hohlraum (5) gebildet ist, sowie mit mindestens einem dem Grunddruck (p₀) des Hydraulikmediums ausgesetzten, zum Abrollen auf einer zu bearbeitenden Werkstückoberfläche vorgesehenen Walzkörper (10), wobei ein einziger Walzkörper (10) vorhanden ist und dieser an der Spitze des Gehäuses (2) angeordnet ist, wobei das Gehäuse (2) als Rohrkörper ausgebildet ist, **dadurch gekennzeichnet, dass** das Werkzeug einen Schwinger (4) aufweist, welcher zur Erzeugung von gezielten Druckpulsen (Δp) im den Grunddruck (p₀) aufweisenden Hydraulikmedium ausgebildet ist, derart dass die Druckpulse (Δp) dem Grunddruck (p₀) überlagernd erzeugt werden, wobei der Schwinger (4) in das als Rohrkörper ausgebildete Gehäuse (2) eingebaut ist.

2. Werkzeug (1) nach Anspruch 1, **dadurch gekennzeichnet, dass** eine Kugel als Walzkörper (10) vorgesehen ist.

3. Werkzeug (1) nach Anspruch 1 oder 2, **gekennzeichnet durch** eine zwischen dem Walzkörper (10) und dem Rohrkörper wirksame Dichtung (11).

4. Werkzeug (1) nach einem der Ansprüche 1 bis 3, **dadurch gekennzeichnet, dass** der Schwinger (4) Teil eines piezoelektrischen Aktuators (3) ist.

5. Verfahren zur mechanischen Oberflächenbearbeitung, wobei mit einem nach Anspruch 1 ausgebildeten Werkzeug (1) eine Oberfläche eines rotierenden metallischen Werkstücks durch pulsierende Druckbeaufschlagung bearbeitet wird, wobei einem Grunddruck (p₀) des Hydraulikmediums gezielt Druckpulse (Δp) überlagert werden und wobei die pulsierende Druckbeaufschlagung mit einer Frequenz erfolgt, welche mindestens dem 24-fachen einer Drehzahl des Werkstücks entspricht.

6. Verfahren nach Anspruch 5, wobei das Werkzeug (1) gegenüber dem Werkstück während der pulsierenden Druckbeaufschlagung linear verschoben wird, wobei sich die Geschwindigkeit der linearen Verschiebung von der Oberflächengeschwindigkeit des Walzkörpers (10) auf dem Werkstück mindestens um den Faktor 6 unterscheidet.

7. Verfahren nach Anspruch 5 oder 6, wobei Druckpulse (Δp) aufgebracht werden, die im Bereich von 0,2 _{*} p₀ bis 200 bar liegen.

8. Verfahren nach Anspruch 5 bis 7, wobei eine Anzahl Tₘ an Druckpulsen pro Wegeinheit des auf einer Oberfläche des Werkstücks absolvierten Walzweges I_{w} im Bereich von 100 bis 5000 pro Meter liegt

9. Verwendung eines Werkzeugs (1) nach Anspruch 1 zur Bearbeitung einer Dichtfläche eines metallischen Bauteils, wobei als Dichtfläche eine Oberfläche des Bauteils bezeichnet wird, gegen welche eine elastische Dichtung aus Kunststoff berührend anläuft.

10. Verwendung nach Anspruch 9, wobei als metallisches Bauteil ein Wälzlagerring oder Gleitlagerring bearbeitet wird.

## Claims

1. A tool (1) for mechanical surface treatment comprising a housing (2), in which there is formed a cavity (5) intended for filling with a hydraulic medium, and comprising at least one roller body (10), which is exposed to the basic pressure (p₀) of the hydraulic medium and is intended for rolling on a workpiece surface to be treated, wherein a single roller body (10) is provided and is arranged at the tip of the housing (2), wherein the housing (2) is formed as a tubular body, **characterised in that** the tool has a resonator (4), which is designed to generate targeted pressure pulses (Δp) in the hydraulic medium having the basic pressure (p₀) in such a way that the pressure pulses (Δp) are generated in a manner superimposing the basic pressure (p₀), wherein the resonator (4) is built into the housing (2) formed as a tubular body.

2. The tool (1) according to claim 1, **characterised in that** a sphere is provided as roller body (10).

3. The tool (1) according to claim 1 or 2, **characterised by** a seal (11) that is effective between the roller body (10) and the tubular body.

4. The tool (1) according to one of claims 1 to 3, **characterised in that** the resonator (4) is part of a piezoelectric actuator (3).

5. A method for mechanical surface treatment, wherein a surface of a rotating metal workpiece is treated by pulsating application of pressure using a tool (1) designed according to claim 1, wherein a basic pressure (p₀) of the hydraulic medium is superimposed by targeted pressure pulses (Δp), and wherein the pulsating application of pressure is implemented with a frequency that corresponds at least to 24 times a rotary speed of the workpiece.

6. The method according to claim 5, wherein the tool (1) is displaced linearly with respect to the workpiece during the pulsating application of pressure, wherein the speed of the linear displacement differs from the surface speed of the roller body (10) on the workpiece at least by a factor of 6.

7. The method according to claim 5 or 6, wherein pressure pulses (Δp) are applied that lie in the range 0.2 ^{∗} p₀ to 200 bar.

8. The method according to claim 5 to 7, wherein a number Tₘ of pressure pulses per distance unit of the rolling path I_{w} completed on a surface of the workpiece lies in the range 100 to 5000 per metre.

9. Use of a tool (1) according to claim 1 for machining a sealing face of a metal component, wherein a surface of the component against which an elastic seal made of plastic comes into contact is referred to as a sealing face.

10. The use according to claim 9, wherein a rolling bearing ring or sliding bearing ring is treated as metal component.

## Revendications

1. Outil (1) de traitement mécanique de surface, comportant un boîtier (2), dans lequel est formée une cavité (5) prévue pour être remplie avec un milieu hydraulique, comportant également au moins un corps roulant (10) exposé à la pression de base (p₀) du milieu hydraulique, pour rouler sur une surface de pièce à usiner à traiter, un corps roulant (10) individuel étant disponible et agencé au niveau du sommet du boîtier (2), le boîtier (2) étant formé comme un corps tubulaire, **caractérisé en ce que** l'outil présente un oscillateur (4) qui est formé pour la production d'impulsions de pression ciblées (Δp) dans le milieu hydraulique présentant la pression de base (p₀), de façon que les impulsions de pression (Δp) soient produites en se superposant à la pression de base (p₀), l'oscillateur (4) étant intégré dans le boîtier (2) formé comme un corps tubulaire.

2. Outil (1) selon la revendication 1, **caractérisé en ce qu'**une bille est prévue comme corps roulant (10).

3. Outil (1) selon la revendication 1 ou 2, **caractérisé par** un joint (11) agissant entre le corps roulant (10) et le corps tubulaire.

4. Outil (1) selon l'une quelconque des revendications 1 à 3, **caractérisé en ce que** l'oscillateur (4) est une partie d'un actionneur piézoélectrique (3).

5. Procédé de traitement mécanique de surface, une surface d'une pièce à usiner mécanique rotative étant traitée par application de pression pulsée avec un outil (1) formé selon la revendication 1, des impulsions de pression ciblées (Δp) se superposant à une pression de base (p₀) du fluide hydraulique et l'application de pression pulsée s'effectuant à une fréquence qui correspond à au moins 24 fois une vitesse de rotation de la pièce à usiner.

6. Procédé selon la revendication 5, l'outil (1) étant déplacé de manière linéaire par rapport à la pièce à usiner pendant l'application de pression pulsée, la vitesse du déplacement linéaire différant de la vitesse de surface du corps roulant (10) sur la pièce à usiner d'au moins le facteur 6.

7. Procédé selon la revendication 5 ou 6, des impulsions de pression (Δp) étant appliquées, lesquelles se situent dans la plage de 0,2 * p₀ à 200 bar.

8. Procédé selon la revendication 5 à 7, un nombre Tₘ d'impulsions de pression par unité de déplacement du trajet de laminage I_{w} effectué sur une surface de la pièce à usiner se situant dans la plage de 100 à 5000 par mètre

9. Utilisation d'un outil (1) selon la revendication 1 pour le traitement d'une surface d'étanchéité d'un composant métallique, une surface du composant étant désignée comme surface d'étanchéité, contre laquelle un joint élastique en matière plastique s'étend en affleurement.

10. Utilisation selon la revendication 9, une bague de palier à roulement ou une bague de palier lisse étant traitée en tant que composant métallique.
